# EUROPÄISCHE PATENTSCHRIFT

(11) **EP 0 803 321 B1**
(45) Veröffentlichungstag und Bekanntmachung des Hinweises auf die Patenterteilung: **21.11.2001**
(21) Anmeldenummer: 96106326.0
(22) Anmeldetag: 23.04.1996
(51) Int. Cl.: B23Q 16/00

(54) **Anschlag, insbesondere für automatische Bearbeitungs- oder Fördervorrichtungen**
Stop, particularly for automatic machining and transporting apparatus
Butée, notamment pour des appareils automatiques d'usinage et de transport

(43) Veröffentlichungstag der Anmeldung: 29.10.1997
(73) Patentinhaber: Wörner, Helmut, D-73770 Denkendorf (DE)
(72) Erfinder: Unterhuber, Sebastian, 73257 Köngen (DE)
(74) Vertreter: Vetter, Hans, Dipl.-Phys. Dr.

(56) Entgegenhaltungen:
- EP-A- 0 036 955
- EP-A- 0 484 648
- EP-A- 0 533 083

## Beschreibung

Die Erfindung betrifft einen Anschlag, insbesondere für automatische Bearbeitungs- oder Fördervorrichtungen, mit einem an einem Grundkörper angeordneten Anschlagglied für sich in einer Bewegungsebene in einer Arbeitsbewegungsrichtung bewegende Gegenstände, das mittels eines Stellglieds aus dieser Bewegungsebene heraus und in diese zurückbewegbar ist.

Ein derartiger Anschlag ist beispielsweise aus der EP-0484648 bekannt. Dieser bekannte Anschlag wird beispielsweise so an der Bewegungsebene von sich bewegenden Gegenständen montiert, daß das Anschlagglied im nicht betätigten Zustand des Stellglieds in die Bewegungsebene vorsteht. Erreicht nun ein solcher Gegenstand das Anschlagglied, so wird er in der entsprechenden Anschlagposition gehalten. Wenn er weiterbewegt werden soll, dann wird das Stellglied betätigt, und das Anschlagglied schwenkt aus der Bewegungsebene heraus, so daß der Gegenstand seine Bewegung in der Bewegungsrichtung fortsetzen kann. Nach Passieren dieses Gegenstands wird das Anschlagglied wieder in die Bewegungsebene zurückgeschwenkt, so daß der darauffolgende Gegenstand wieder in der entsprechenden Anschlagposition angehalten wird, um beispielsweise bearbeitet, beladen, entladen od.dgl. zu werden. Der Nachteil der bekannten Anordnung besteht darin, daß das Anschlagglied erst dann wieder in die Bewegungsebene zurückgeschwenkt werden kann, wenn der soeben vom Anschlagglied gelöste Gegenstand dieses vollständig passiert hat. Es muß daher eine Zeitsteuerung oder eine Verzögerungseinrichtung geschaffen werden, um die Rückstellbewegung des Stellglieds entsprechend zu verzögern.

Eine Aufgabe der vorliegenden Erfindung besteht nun darin, einen Anschlag der eingangs genannten Gattung so zu verbessern, daß auf eine Verzögerung der Rückstellbewegung des Stellglieds völlig verzichtet werden kann.

Diese Aufgabe wird erfindungsgemäß dadurch gelöst, daß das Anschlagglied um eine Schwenkachse schwenkbar an einer Halterung gelagert ist, die zusammen mit dem Anschlagglied durch das Stellglied bewegbar ist, wobei ein sich von der Schwenkachse aus nach unten erstreckender erster Bereich des Anschlagglieds durch Schwerkrafteinwirkung und/oder eine Feder durch Federkraft das Anschlagglied in seiner Arbeitsschwenkstellung hält, in der ein zweiter Bereich des Anschlagglieds bei nicht betätigtem Stellglied in die Bewegungsebene hineinragt, und daß ein an der Halterung angeordnetes Anlageelement für das Anschlagglied eine Schwenkbewegung des zweiten Bereichs (35) des Anschlagglieds (28) nur entgegen der Arbeitsbewegungsrichtung gestattet, wobei dieser zweite Bereich so ausgebildet ist, daß er bei einer Krafteinwirkung aus einer Richtung senkrecht zur Arbeitsbewegungsrichtung und senkrecht zur Schwenkachse aus der Arbeitsschwenkstellung herausgeschwenkt wird.

Die Vorteile dieses Anschlags bestehen insbesondere darin, daß nach einer Stellgliedbetätigung zum Herausbewegen des Anschlagglieds aus der Bewegungsebene der Gegenstände das Stellglied sofort wieder zurückgestellt werden kann, ohne daß irgend welche Rücksichten im Hinblick auf Kollisionen zwischen dem Anschlagglied und dem betreffenden Gegenstand zu nehmen sind. Dies ist deshalb möglich, da das Anschlagglied bei einem sofortigen Zurückstellen des Stellglieds in Kontakt mit dem betreffenden Gegenstand gelangt, was zu einer Krafteinwirkung auf den zweiten Bereich des Anschlagglieds führt, durch die dieses Anschlagglied aus der Arbeitsschwenkstellung herausgeschwenkt wird. Sofort nach dem Passieren des Gegenstandes wird diese Krafteinwirkung beendet, und das Anschlagglied gelangt schwerkraftbedingt und/oder durch Federkraft automatisch wieder in die Arbeitsschwenkstellung zurück, um als Anschlag für den darauffolgenden Gegenstand dienen zu können. Es ist daher lediglich zum Loslassen eines Gegenstands eine kurze Betätigung des Stellglieds erforderlich, wobei für die Rückstellung des Stellglieds keinerlei besondere Maßnahmen, wie Zeit- oder Verzögerungsglieder, vorgesehen sein müssen. Ein einfaches Betätigungssignal, dessen Länge variieren kann, ist ausreichend. Dadurch ist auch keinerlei Anpassung an unterschiedlich geformte Gegenstände erforderlich, die nacheinander an den Anschlag gelangen. Dieser Wegfall der Anpassung führt zu einer weiteren Kosteneinsparung und Verringerung des Arbeitsaufwands beim erfindungsgemäßen Anschlag.

Durch die in den Unteransprüchen aufgeführten Maßnahmen sind vorteilhafte Weiterbildungen und Verbesserungen des im Anspruch 1 angegebenen Anschlags möglich.

Die von der Schwenkachse aus am weitesten senkrecht zur Arbeitsbewegungsrichtung zur Bewegungsebene hin vorstehende, den Ort der Krafteinwirkung bildende Stelle des zweiten Bereichs des Anschlagglieds ist zweckmäßigerweise entgegen der Arbeitsbewegungsrichtung mit Bezug auf die Schwenkachse versetzt, um durch die Krafteinwirkung ein Drehmoment zu erzeugen, das das erwünschte Herausschwenken aus der Arbeitsschwenkstellung zur Folge hat.

Zur Verbesserung der Kraftübertragung und zur Erleichterung des Schwenkvorgangs ist in vorteilhafter Weise eine Rolle zur Aufnahme der Krafteinwirkung am Anschlagglied drehbar gelagert.

In einer vorteilhaften konstruktiven Ausgestaltung ist das Anschlagglied in einer schlitzartigen Ausnehmung der Halterung schwenkbar gelagert, wobei die Halterung vorzugsweise aus zwei Lagerbereichen zu beiden Seiten der schlitzartigen Ausnehmung besteht, die durch das Anlageelement miteinander verbunden sind.

Der erste Bereich des Anschlagglieds besitzt zweckmäßigerweise eine dieses durch Schwerkrafteinwirkung in Anlage am Anlageelement haltende Gestalt und Masseverteilung, so daß immer ein definierter Anschlagpunkt vorgegeben werden kann.

Zum Herausschwenken des Anschlagglieds aus der Bewegungsebene mittels des Stellglieds ist vorzugsweise am oder im Grundkörper ein mit der Halterung verbundenes, durch das insbesondere fluidisch betätigbare Stellglied verschwenkbares Schwenkteil angeordnet. Dies kann in an sich bekannter Weise noch eine Bewegungsdämpfungseinrichtung enthalten, wobei wenigstens ein Dämpfungsglied mit der Halterung über ein stangenartiges Verbindungsglied verbunden ist. Das Dämpfungsglied ist dabei zweckmäßigerweise als Dämpfungskolben ausgebildet, der insbesondere eine fluidische Rückstellungseinrichtung besitzt, um eine Rückstellung in die Dämpfungsstellung vornehmen zu können.

Ein Ausführungsbeispiel der Erfindung ist in der Zeichnung dargestellt und in der nachfolgenden Beschreibung näher erläutert. Es zeigen:
- Fig. 1: eine Seitenansicht eines Anschlags als Ausführungsbeispiel der Erfindung und
- Fig. 2: den in Fig. 1 dargestellten Anschlag in einer Draufsicht.

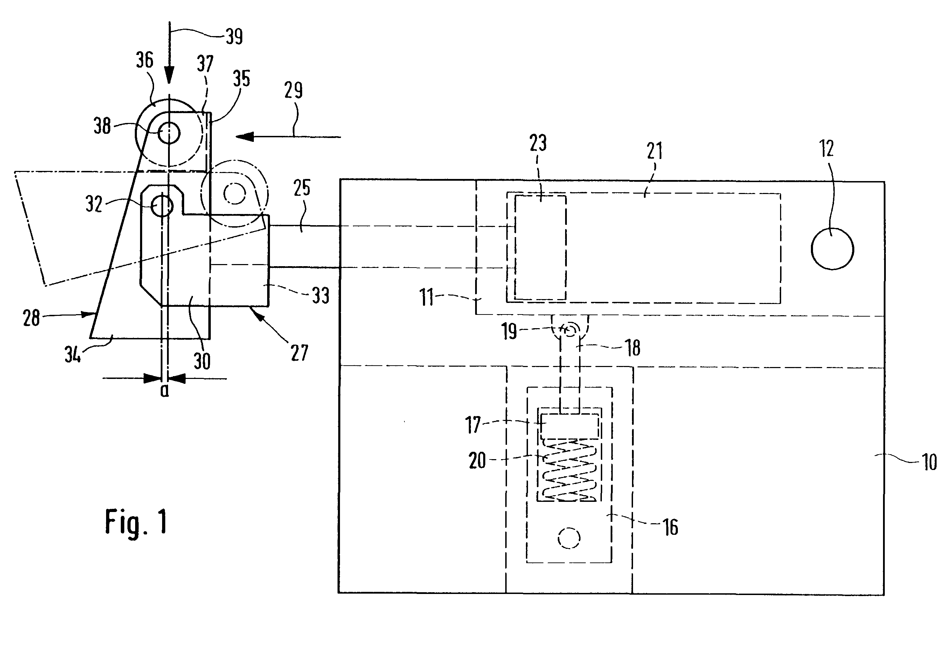

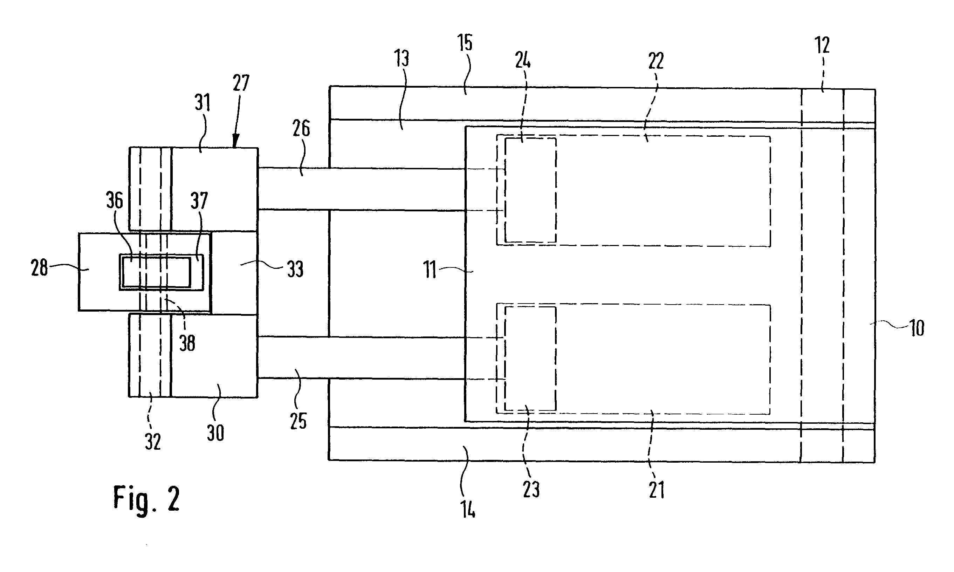

Bei dem in den Fig. 1 und 2 dargestellten Ausführungsbeispiel eines Anschlags ist in einem im wesentlichen quaderförmigen Grundkörper 10 ein Schwenkteil 11 um eine Achse 12 schwenkbar gelagert. Das Schwenkteil 11 ist dabei in einer entsprechenden Ausnehmung 13 im oberen Bereich des Grundkörpers 10 angeordnet, wobei diese Ausnehmung 13 durch zwei seitliche verbleibende Längswandungen 14, 15 begrenzt ist, durch die die Achse 12 gehalten wird.

Das Schwenkteil 11 wird durch einen pneumatischen (oder auch hydraulischen) Stellzylinder 16 bewegt, der unterhalb des Schwenkteils 11 im Grundkörper 10 angeordnet ist. Er besitzt im Innern einen pneumatisch betätigbaren Kolben 17, dessen Kolbenstange 18 über ein Gelenk 19 mit dem Schwenkteil 11 verbunden ist. Der Kolben 17 wird durch eine Rückstellfeder 20 in seiner obersten Stellung gehalten, in der das Schwenkteil 11 im wesentlichen horizontal im Grundkörper 10 angeordnet ist, wobei in dieser Stellung die Oberseite des Grundkörpers 10 im wesentlichen mit der Oberseite des Schwenkteils 11 eine Ebene bildet. Wird der Stellzylinder 16 betätigt, so bewegt sich der Kolben 17 gegen die Kraft der Rückstellfeder 20 nach unten und schwenkt dadurch das Schwenkteil 11 um die Achse 12. Nach Beendigung der Betätigung des Stellzylinders 16 wird der Kolben 17 durch die Rückstellfeder 20 wieder in seine obere Position zurückgeführt.

Im Schwenkteil 11 sind zwei parallel nebeneinander angeordnete Dämpfungszylinder 21, 22 integriert. Ihre Dämpfungskolben 23, 24 sind mit Kolbenstangen 25, 26 versehen, die an ihrem freien Ende eine Halterung 27 für ein Anschlagglied 28 tragen. Das Anschlagglied 28 dient als Anschlag für Gegenstände, die sich in einer Bewegungsebene oberhalb des Grundkörpers 10 in einer Arbeitsbewegungsrichtung 29 bewegen, z.B. bei einer Bearbeitungs- oder Fördervorrichtung. Erreicht ein solcher, in den Figuren nicht dargestellter Gegenstand das Anschlagglied 28, so wird die Bewegung des Gegenstandes zunächst durch die Dämpfungszylinder 21, 22 gedämpft bzw. abgebremst, indem die Dämpfungskolben 23, 24 aus ihrer rechten Position in den Dämpungszylindern 21, 22 in die dargestellte linke Position bewegt werden. Ist ein Bearbeitungs-, Beladungs- oder Entladungsvorgang bei dem betreffenden Gegenstand abgeschlossen, so wird der Stellzylinder 16 betätigt, um das Anschlagglied 28 aus der Bewegungsebene der Gegenstände herauszuschwenken. Der Gegenstand setzt dann seine Arbeitsbewegung fort, und nach dem Ende der Betätigung des Stellzylinders 16 wird das Anschlagglied 28 in seine Arbeitsschwenkstellung zurückgeschwenkt.

Die vorstehend beschriebenen Funktionen und Arbeitsabläufe sind bereits aus der eingangs genannten EP-0484648 bekannt. In dieser Druckschrift sind auch konstruktive Alternativen für die Dämpfungseinrichtung und den Stellzylinder angegeben und beschrieben. Die Ausbildung der Dämpfungseinrichtung und des Stellzylinders 16 kann vielfach variieren, wobei im einfachsten Falle auch die Dämpfungseinrichtung entfallen kann. Wesentlich ist lediglich die Möglichkeit eines Herausschwenkens des Anschlagglieds 28 aus der Bewegungsebene der sich in der Arbeitsbewegungsrichtung 29 bewegenden Gegenstände sowie der Rückschwenkvorgang in die Arbeitsschwenkstellung.

Die Halterung 27 besteht aus zwei seitlichen plättchenartigen Lagerbereichen 30, 31 für eine Schwenkachse 32, an der das Anschlagglied 28 schwenkbar zwischen den beiden Lagerbereichen 30, 31 gelagert ist. Der Abstand zwischen den beiden Lagerbereichen 30, 31 wird durch ein Anlageelement 33 vorgegeben, das die beiden Lagerbereiche 30, 31 verbindet. Hierdurch wird eine schlitzartige Ausnehmung für das Anschlagglied 28 zwischen den beiden Lagerbereichen 30, 31 gebildet. Jeder der Lagerbereiche 30, 31 ist mit einer der beiden Kolbenstangen 25, 26 starr verbunden.

Das schwenkbar zwischen den beiden Lagerbereichen 30, 31 angeordnete Anschlagglied 28 ist ebenfalls im wesentlichen plättchenartig ausgebildet und besitzt einen sich in der dargestellten Arbeitsschwenkstellung nach unten erstreckenden ersten Bereich 34 und einen sich nach oben erstreckenden zweiten Bereich 35. Der erste Bereich 34 liegt mit seiner zum Grundkörper 10 hin gewandten hinteren vertikalen Wandung am Anlageelement 33 an, während die entgegengesetzte vordere Wandung schräg verläuft, so daß sich der erste Bereich 34 dadurch nach unten verbreitert. Die durch die Verbreiterung bewirkte Masseverteilung des ersten Bereichs 34 bzw. des Anschlagglieds 28 insgesamt bewirkt ein Drehmoment, durch das das Anschlagglied 28 ohne die Einwirkung sonstiger Kräfte am Anlageelement 33 in Anlage gehalten wird. Selbstverständlich kann dieses Drehmoment auch durch eine andere Gestalt oder Masseverteilung und/oder durch eine Feder erreicht werden. Bei einer Erzeugung dieses Drehmoments nur durch eine Feder kann die beschriebene Verbreiterung selbstverständlich entfallen.

Im zweiten oberen Bereich 35 ist eine Rolle 36 in einer entsprechenden Ausnehmung 37 an einer Achse 38 drehbar gelagert, die parallel zur Schwenkachse 32 verläuft. In der dargestellten Arbeitsschwenkstellung steht die Rolle 36 oben aus dem Anschlagglied 28 heraus vor, das heißt in einer Richtung senkrecht zur Arbeitsbewegungsrichtung 29 zur Bewegungsebene der Gegenstände hin. Dabei ist es von Bedeutung, daß die Achse 38 entgegen der Arbeitsbewegungsrichtung 29 mit Bezug auf die Schwenkachse 32 versetzt ist, im dargestellten Ausführungsbeispiel um die Strecke a. Hierdurch wird bewirkt, daß bei einer Krafteinwirkung aus einer Kraftrichtung 39 von oben auf die Rolle 36 ein Schwenkvorgang des Anschlagglieds 28 um die Schwenkachse 32 bewirkt wird. Diese zweite, durch die Krafteinwirkung bewirkte Schwenkstellung ist in Fig. 1 gestrichelt dargestellt.

Wird nun ein durch das Anschlagglied 28 angehaltener Gegenstand durch eine kurzzeitige Betätigung des Stellzylinders 16 freigegeben, so schwenkt das Anschlagglied 28 zunächst aus der dargestellten Arbeitsschwenkstellung nach unten, um dann sofort wieder hochgeschwenkt zu werden. Da sich zu diesem Zeitpunkt noch der sich weiterbewegende Gegenstand über dem Anschlagglied 28 befindet, übt er eine Kraft von oben auf die Rolle 36 aus, was zu einem Verschwenken des Anschlagglieds 28 um die Schwenkachse 32 in die gestrichelt dargestellte Schwenkstellung führt. Die Rolle 36 rollt dabei an der Unterseite des Gegenstands ab. Nach Passieren des Gegenstands wird das Anschlagglied 28 automatisch durch Schwerkrafteinwirkung in die vertikale Arbeitsschwenkstellung zurückgeführt und ist wieder als Anschlag für den darauffolgenden Gegenstand einsatzbereit.

In Abwandlung des dargestellten Ausführungsbeispiels könnte in einer einfacheren Ausführung auch die Rolle 36 entfallen, so daß ein entsprechend abgerundeter Bereich des Anschlagglieds 28 am jeweiligen Gegenstand entlanggleitet. Weiterhin könnte selbstverständlich gemäß dem angegebenen Stand der Technik nur ein einziger Dämpfungszylinder vorgesehen sein, wobei - wie bereits ausgeführt - auch auf eine Dämpfungseinrichtung vollständig verzichtet werden könnte.

## Patentansprüche

1. Anschlag, insbesondere für automatische Bearbeitungs- oder Fördervorrichtungen, mit einem an einem Grundkörper (10) angeordneten Anschlagglied (28) für sich in einer Bewegungsebene in einer Arbeitsbewegungsrichtung (29) bewegende Gegenstände, das mittels eines Stellglieds (16) aus dieser Bewegungsebene heraus und in diese zurückbewegbar ist, **dadurch gekennzeichnet, daß** das Anschlagglied (28) um eine Schwenkachse (32) schwenkbar an einer Halterung (27) gelagert ist, die zusammen mit dem Anschlagglied (28) durch das Stellglied (16) bewegbar ist, wobei ein sich von der Schwenkachse (32) aus nach unten erstreckender erster Bereich (34) des Anschlagglieds (28) durch Schwerkrafteinwirkung und/oder eine Feder durch Federkraft das Anschlagglied (28) in seiner Arbeitsschwenkstellung hält, in der ein zweiter Bereich (35) des Anschlagglieds (28) bei nicht betätigtem Stellglied (16) in die Bewegungsebene hineinragt, und daß ein an der Halterung (27) angeordnetes Anlageelement (33) für das Anschlagglied (28) eine Schwenkbewegung des zweiten Bereichs (35) des Anschlagglieds (28) nur entgegen der Arbeitsbewegungsrichtung (29) gestattet, wobei dieser zweite Bereich (35) so ausgebildet ist, daß er bei einer Krafteinwirkung aus einer Richtung (39) senkrecht zur Arbeitsbewegungsrichtung (29) und senkrecht zur Schwenkachse (32) aus der Arbeitsschwenkstellung herausgeschwenkt wird.

2. Anschlag nach Anspruch 1, **dadurch gekennzeichnet, daß** die von der Schwenkachse (32) aus am weitesten senkrecht zur Arbeitsbewegungsrichtung (29) zur Bewegungsebene hin vorstehende, den Ort der Krafteinwirkung bildende Stelle des zweiten Bereichs (35) des Anschlagglieds (28) entgegen der Arbeitsbewegungsrichtung (29) mit Bezug auf die Schwenkachse (32) versetzt ist.

3. Anschlag nach Anspruch 1 oder 2, **dadurch gekennzeichnet, daß** eine Rolle (36) zur Aufnahme der Krafteinwirkung am Anschlagglied (28) drehbar gelagert ist.

4. Anschlag nach einem der vorhergehenden Ansprüche, **dadurch gekennzeichnet, daß** das Anschlagglied (28) in einer schlitzartigen Ausnehmung der Halterung (27) schwenkbar gelagert ist.

5. Anschlag nach Anspruch 4, **dadurch gekennzeichnet, daß** die Halterung aus zwei Lagerbereichen (30, 31) zu beiden Seiten der schlitzartigen Ausnehmung besteht, die durch das Anlageelement (33) miteinander verbunden sind.

6. Anschlag nach einem der vorhergehenden Ansprüche, **dadurch gekennzeichnet, daß** der erste Bereich (34) des Anschlagglieds (28) eine dieses durch Schwerkrafteinwirkung in Anlage am Anlageelement (33) haltende Gestalt und Masseverteilung besitzt.

7. Anschlag nach Anspruch 6, **dadurch gekennzeichnet, daß** das Anlageelement (33) zur Anlage des ersten Bereichs (34) des Anschlagglieds (28) ausgebildet ist.

8. Anschlag nach einem der vorhergehenden Ansprüche, **dadurch gekennzeichnet, daß** am oder im Grundkörper (10) ein mit der Halterung (27) verbundenes, durch das insbesondere fluidisch betätigbare Stellglied (16) verschwenkbares Schwenkteil (11) angeordnet ist.

9. Anschlag nach Anspruch 8, **dadurch gekennzeichnet, daß** das Schwenkteil (11) eine Bewegungsdämpfungseinrichtung (21 - - 24) enthält, wobei wenigstens ein Dämpfungsglied (23, 24) mit der Halterung (27) über ein stangenartiges Verbindungsglied (25, 26)verbunden ist.

10. Anschlag nach Anspruch 9, **dadurch gekennzeichnet, daß** das Dämpfungsglied (23, 24) als Dämpfungskolben ausgebildet ist.

11. Anschlag nach Anspruch 10, **dadurch gekennzeichnet, daß** der Dämpfungskolben (23, 24) mit einer Rückstellungseinrichtung versehen ist.

## Claims

1. Stop, in particular for automatic machining or transfer devices, with a stop element (28) fitted to a body (10) for objects moving in a plane of movement in an operating movement direction (29) and which is movable out of and back into this plane of movement by means of a control element (16), **characterized in that** the stop element (28) is mounted, so as to be pivotable around a swivel axis (32), on a mount (27) which may be moved together with the stop element (28) by the control element (16), wherein a first area (34) of the stop element (28) extending downwards from the swivel axis (32) holds the stop element (28) by the force of gravity and/or a spring by spring force in its operating angular position in which, with the control element (16) not actuated, a second area (35) of the stop element (28) extends into the plane of movement, and that a contact element (33) for the stop element (28) fitted to the mount (27) allows a swivel movement of the second area (35) of the stop element (28) only against the operating movement direction (29), wherein this second area (35) is so designed that it is swivelled out of the operating angular position by a force acting from a direction (39) at right-angles to the operating movement direction (29) and at right-angles to the swivel axis (32).

2. Stop according to claim 1, **characterized in that** the point of the second area (35) of the stop element (28) forming the location at which the force acts, and extending furthest from the swivel axis (32) towards the plane of movement at right-angles to the operating movement direction (29), is offset relative to the swivel axis (32) against the operating movement direction (29).

3. Stop according to claim 1 or 2, **characterized in that** a pulley (36) is rotatably mounted on the stop element (28) to absorb the action of force.

4. Stop according to any of the preceding claims, **characterized in that** the stop element (28) is pivotably mounted in a slot-like recess of the mount (27).

5. Stop according to claim 4, **characterized in that** the mount is comprised of two bearing sections (30, 31) on either side of the slot-like recess, joined together by the contact element (33).

6. Stop according to any of the preceding claims, **characterized in that** the first area (34) of the stop element (28) has a shape and weight distribution holding it in contact with the contact element (33) by the force of gravity.

7. Stop according to claim 6, **characterized in that** the contact element (33) is designed to bear against the first area (34) of the stop element (28).

8. Stop according to any of the preceding claims, **characterized in that** a swivel section (11) connected to the mount (27) and swivelled by the control element (16), which is in particular fluid-actuable, is located on or in the body (10).

9. Stop according to claim 8, **characterized in that** the swivel section (11) contains a movement damping device (21 - 24) wherein at least one damping element (23, 24) is connected to the mount (27) via a rod-like connecting member (25, 26).

10. Stop according to claim 9, **characterized in that** the damping element (23, 24) is in the form of a damping piston.

11. Stop according to claim 10, **characterized in that** the damping piston (23, 24) is provided with a resetting device.

## Revendications

1. Butée, en particulier pour dispositifs automatiques d'usinage ou de transport, comportant un élément de butée (28), disposé sur un corps de base (10) pour des objets qui se déplacent dans un plan de déplacement, dans un sens de déplacement de travail, lequel élément de butée peut être déplacé, au moyen d'un élément de réglage (16), à l'extérieur de ce plan de déplacement et replacé dans celui-ci, **caractérisée en ce que** l'élément de butée (28) est monté, de manière à pouvoir pivoter autour d'un axe de pivotement (32), sur un support (27), qui est déplaçable avec l'élément de butée (28), par l'élément de réglage (16), une première zone (34) de l'élément de butée (28), s'étendant vers le bas depuis l'axe de pivotement (32), maintenant l'élément de butée (28) dans sa position pivotée de travail, par l'effet de la force de gravité et/ou par la force d'un ressort, position dans laquelle une deuxième zone (35) de l'élément de butée (28) s'engage dans le plan de déplacement, lorsque l'élément de réglage (16) n'est pas actionné, et **en ce qu'**un élément de contact (33), disposé sur le support (27), pour l'élément de butée (28), autorise un mouvement de pivotement de la deuxième zone (35) de l'élément de butée (28), uniquement dans le sens opposé au sens de déplacement de travail (29), cette deuxième zone (35) étant telle qu'elle est pivotée à l'extérieur de la position pivotée de travail, lorsqu'une force agit dans un sens (39), perpendiculairement au sens de déplacement de travail (29) et perpendiculairement à l'axe de pivotement (32).

2. Butée selon la revendication 1, **caractérisée en ce que** l'emplacement de la deuxième zone (35) de l'élément de butée (28), qui dépasse le plus loin de l'axe de pivotement (32), perpendiculairement au sens de déplacement de travail (29), vers le plan de déplacement, et qui constitue le lieu de l'action de la force, est décalé dans le sens contraire au sens de déplacement de travail (29), par rapport à l'axe de pivotement (32).

3. Butée selon la revendication 1 ou 2, **caractérisée en ce qu'**un rouleau (36) est monté tournant sur l'élément de butée (28), pour absorber l'action de la force.

4. Butée selon l'une des revendications précédentes, **caractérisée en ce que** l'élément de butée (28) est monté de manière à pouvoir pivoter dans un évidement de type fente du support (27).

5. Butée selon la revendication 4, **caractérisée en ce que** le support est constitué de deux zones de palier (30, 31) des deux côtés de l'évidement de type fente, qui sont reliées entre elles par l'élément de contact (33).

6. Butée selon l'une des revendications précédentes, **caractérisée en ce que** la première zone (34) de l'élément de butée (28) présente une forme et une distribution de la masse qui maintiennent cet élément de butée en contact avec l'élément de contact (33), par l'action de la force de gravité.

7. Butée selon la revendication 6, **caractérisée en ce que** l'élément de contact (33) est conçu pour le contact de la première zone (34) de l'élément de butée (28).

8. Butée selon l'une des revendications précédentes, **caractérisée en ce qu'**il est prévu sur ou dans le corps de base (10), une partie pivotante (11) reliée au support (27) et qui peut pivoter sous l'effet de l'élément de réglage (16), qui peut être actionné en particulier au moyen d'un fluide.

9. Butée selon la revendication 8, **caractérisée en ce que** la partie pivotante (11) contient un dispositif d'amortissement de déplacement (21, 24), au moins un élément d'amortissement (23, 24) étant relié au support (27), par un élément de liaison (25, 26) de type tige.

10. Butée selon la revendication 9, **caractérisée en ce que** l'élément d'amortissement (23, 24) est réalisé en tant que piston d'amortissement.

11. Butée selon la revendication 10, **caractérisée en ce que** le piston d'amortissement (23, 24) est pourvu d'un dispositif de rappel.
